(19) Europäisches Patentamt
European Patent Office
Office européen des brevets

(11) Numéro de publication: **0 107 532**
**B1**

(12) **FASCICULE DE BREVET EUROPEEN**

(45) Date de publication du fascicule du brevet: **09.03.88**

(51) Int. Cl.$^4$: **G 02 B 6/16,** G 02 B 6/18

(21) Numéro de dépôt: **83401805.3**

(22) Date de dépôt: **15.09.83**

# (54) Fibres optiques en matière plastique, notamment scintillantes et leur procédé de fabrication.

(30) Priorité: **23.09.82 FR 8216026**

(43) Date de publication de la demande:
**02.05.84 Bulletin 84/18**

(45) Mention de la délivrance du brevet:
**09.03.88 Bulletin 88/10**

(84) Etats contractants désignés:
**DE GB IT SE**

(56) Documents cités:
**GB-A-2 086 607**
**US-A-3 472 921**
**US-A-3 920 313**
**US-A-4 274 709**
**CHEMICAL ABSTRACTS, vol. 96, 1982, page 575, no. 43684a, Columbus, Ohio, US, T. KAINO et al.: "Low-loss polystyrene core-optical fibers"**

**Le dossier contient des informations techniques présentées postérieurement au dépôt de la demande et ne figurant pas dans le présent fascicule.**

(73) Titulaire: **COMMISSARIAT A L'ENERGIE ATOMIQUE**
**31/33, rue de la Fédération**
**F-75015 Paris (FR)**

(72) Inventeur: **Allemand, Louis-René**
**18 rue Mozart**
**F-91470 Limours (FR)**
Inventeur: **Calvet, Jean**
**15 rue Dussoubs**
**F-75002 Paris (FR)**
Inventeur: **Cavan, Jean-Claude**
**31 rue Leroyer**
**F-94300 Vincennes (FR)**
Inventeur: **Thevenin, Jean-Claude**
**54 rue de Villacoublay**
**F-78140 Velizy Villacoublay (FR)**

(74) Mandataire: **Mongrédien, André et al**
**c/o BREVATOME 25, rue de Ponthieu**
**F-75008 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

EP 0 107 532 B1

**Description**

La présente invention a pour objet des fibres optiques en matière plastique, notamment scintillantes, et leur procédé de fabrication. Ces fibres, qui peuvent être notamment des fibres à gradient d'indice, sont utilisées pour la transmission optique, notamment dans les domaines de la médecine, des télécommunications, de l'automobile, et de la décoration.

Ces fibres optiques sont généralement formées d'un premier matériau constituant le coeur de la fibre et d'un second matériau, entourant le premier, et constituant la gaine de la fibre. Le matériau de coeur dans lequel se propage l'énergie lumineuse utile, doit présenter de bonnes caractéristiques de transmission de la lumière; il présente un indice de réfraction supérieur à celui du matériau de gaine.

Dans de telles fibres optiques, la lumière se propage par réflexion totale à l'interface coeur-gaine; ce type de propagation permet de transmettre des quantités de lumière d'autant plus grandes que la différence entre les indices de réfraction du matériau de coeur et du matériau de gaine est plus grande.

Comme matériau de coeur, on utilise généralement du verre ou de la silice, ces matériaux présentant de bonnes caractéristiques de transmission optiques. Cependant, ces fibres ont l'inconvénient d'être chères, lourdes et relativement peu flexibles. Aussi, au cours de ces dernières années, diverses tentatives ont été faites pour fabriquer des fibres optiques en matière plastique.

Les fibres en matière plastique connues jusqu'à ce jour sont constituées par des matériaux transparent du type amorphe comme par exemple le polyméthacrylate de méthyle, connu sous l'abréviation PMMA. Ce matériau est généralement utilisé comme matériau de coeur.

En effet, le PMMA possède une transparence élevée et une bonne flexibilité. Cependant, il présente un indice de réfraction relativement bas (1,48—1,50), ce qui nécessite l'emploi de matériau de gaine de faible indice de réfraction. Or, les polymères de faible indice sont extrêmement rares. L'un des polymères utilisables est le polyméthacrylate de 2,2,2 tri-fluoroéthyle; il présente un indice de réfraction voisin de 1,41.

Des fibres optiques constituées de ce matériau comme matériau de gaine et du PMMA comme matériau de coeur ainsi que leur procédé de fabrication ont été décrits dans un brevet japonais n° 56 8321 (année 1981).

Malheureusement, ces fibres optiques présentent une ouverture angulaire de la lumière transmissible faible. Par ailleurs, la qualité de l'interface coeur-gaine, où se produit la réflexion totale, est relativement médiocre, ceci étant une conséquence du procédé de fabrication (coextrusion par filière double).

On connaît par ailleurs du document Chemical Abstracts, vol. 96 (1982) p. 575, n° 43684a de T. Kaino et al., des fibres optiques en matière plastique ayant un coeur en polystyrène et une gaine en copolymère d'acétate de vinyle et d'éthylène, dans lequel l'acétate de vinyle joue le rôle d'un additif.

On connaît encore du document GB—A—1 037 498 des fibres optiques ayant un coeur en polystyrène et une gaine en un polymère fluoré tel que fluorure de vinylidène et d'hexafluoropropylène.

La présente invention a justement pour objet des fibres optiques en matière plastique permettant de remédier aux inconvénients ci-dessus.

Selon l'invention, les fibres optiques comprenant un coeur et une gaine se caractérisent en ce que le gaine est constituée principalement d'un polymère d'acétate de vinyle ou d'un dérivé fluoré de l'acétate de vinyle.

Ces polymères présentent un indice optique relativement bas, de 1,45—1,46 pour l'acétate de polyvinyle. Ils présentent une bonne transparence pour tout le spectre visible jusqu'à 350 nm dans l'ultraviolet. Par ailleurs, la viscosité de ces polymères est adaptable à celle constituant la matériau de coeur puisque suivant le taux de polymérisation (nombre de monomères entrant dans la composition du polymère), la température de fusion peut varier de 65 à 200°C.

Selon un mode avantageux de réalisation de l'invention, le coeur est constitué principalement du polymère d'un composé de formule:

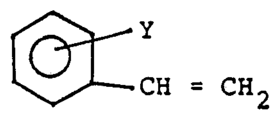

dans laquelle Y représente un hydrogène ou un radical alkyle. De préférence, le composé utilisé est du styrène.

Ces matériaux présentent des indices de réfraction élevés; pour le polystyrène l'indice de réfraction est de 1,58—1,62. L'importante différence d'indice entre les matériaux de coeur (1,58—1,62) et de la gaine (1,45—1,46) de ces fibres favorise la transmission de la lumière par ces dernières.

Par ailleurs, les polymères de l'acétate de vinyle et des dérivés fluorés de l'acétate de vinyle présentent un bon pouvoir d'adhérence vis-à-vis de ces matériaux de coeur; ceci est très important pour obtenir une bonne qualité de l'interface coeur-gaine.

De plus, l'emploi de ces polymères de coeur et de gaine permet d'obtenir des fibres optiques en matière plastique, présentant une ouverture angulaire de la lumière transmise plus élevée que celles de l'art antérieur, exception faite des fibres polystyrène-silicone qui constituent une réalisation de laboratoire, le silicone, s'il a une affinité pour la silice n'ayant aucune adhérence sur les composés organiques.

Selon l'invention, l'introduction de certains produits dopants dans le matériau de coeur, permet d'obtenir des fibres optiques ayant des propriétés de scintillation ou de fluorescence.

De préférence, ces produits dopants sont le 2-(4,tert-butylphényl)5-(4-biphénylyl)1,3,4 oxadiazole, appelé, ci-après, sous l'abréviation de

butyl.PBD et le 1,4-di[2-(4-méthyl-5-phényloxazolyl)] benzène, appelé, ci-après, sous l'abréviation de diméthyl.POPOP.

L'invention a aussi pour objet un procédé de fabrication de fibres optiques, notamment de celles qui ont été décrites précédemment.

Ce procédé se caractérise en ce que l'on effectue un étirage par gravité d'une préforme constituée d'un barreau en matériau de coeur et d'une couche en matériau de gaine constituée principalement d'un polymère d'acetate de vinyle ou d'un dérivé fluoré de l'acetate de vinyle.

De préférence, ladite préforme est étirée lors du passage dans un four, en dehors de tout contact mécanique.

Le fait de réaliser une préforme en recouvrant le matériau de coeur par le matériau de gaine permet, lors des opérations suivantes du procédé, de protéger l'interface coeur-gaine de la fibre optique.

De préférence, on réalise le barreau en matériau de coeur par une polymérisation suivie d'un traitement thermique. Ce traitement thermique améliore l'état de surface entre les matériaux de coeur et de gaine. Il permet de plus d'éliminer les contraintes mécaniques apparues lors de la polymérisation.

Le matériau de gaine est constitué d'un polymère, ou du mélange de deux polymères de viscosités différentes, afin d'adapter la viscosité dudit matériau de gaine à celle du matériau de coeur. Cette adaptation de la viscosité du matériau de gaine permet d'étirer les matériaux de coeur et de gaine à la même vitesse et donc de rendre aisée l'étape d'étirage de la préforme.

D'autres caractéristiques et avantages de l'invention apparaitront mieux après la lecture de la description qui va suivre, donnée à titre illustratif.

Selon l'invention, le matériau de gaine des fibres optiques est constitué principalement par de l'acétate de polyvinyle ou par un polymère d'un dérivé fluoré de l'acétate de vinyle tel que le trifluoroacétate de vinyle. Par ailleurs, le matériau de coeur est constitué de préférence par le polymère d'un composé de formule:

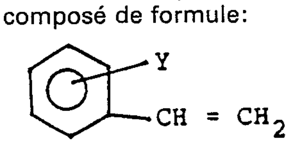

dans laquelle Y représente un hydrogène ou un radical alkyle comme par exemple $CH_3$.

A titre d'exemple, on décrit ci-après la fabrication d'une fibre optique dont le matériau de coeur est du polystyrène (Y=H dans la formule ci-dessus) et dont le matériau de gaine est l'acétate de polyvinyle. Bien entendu, ce procédé de fabrication est applicable à tout autre matériau de coeur, notamment aux polyvinyltoluènes ($Y=CH_3$ dans la formule ci-dessus), et à tout autre matériau de gaine, notamment au trifluoroacétate de vinyle.

Les premières étapes du procédé consistent à réaliser un barreau en polystyrène. Ce barreau est obtenu en polymérisant dans une ampoule de verre, scellée sous vide après dégazage, du styrène pur; la purification du styrène peut être réalisée par une distillation sous basse pression et à faible température (40°C environ), en présence de gaz neutre (azote ou argon), et en éliminant les produits obtenus en début et en fin de distillation. La polymérisation est poursuivie en masse, par chauffage, notamment en plaçant l'ampoule dans une étuve selon un cycle thermique adéquat s'étendant sur 4 hours de 90°C à 170°C par exemple pendant 24 heures à 90°C puis pendant 24 autres heures à 170°C. Après retour à l'ambiant, l'ampoule est brisée.

Un recuit après démoulage à environ 80°C peut être effectué pour éliminer les contraintes mécaniques apparues lors de la polymérisation. Le recuit est ensuite suivi d'un glaçage de surface du barreau, c'est-à-dire d'un passage du barreau au four à infrarouge, à une température de l'ordre de 160°C, afin de produire une fusion de surface. Le glaçage permet d'obtenir un barreau de polystyrène dont la surface est quasi parfaite.

L'obtention de fibres optiques ayant des propriétés scintillantes ou fluorescentes est réalisée en mélangeant au styrène pur des produits dopants scintillants ou fluorescents avant d'effectuer la polymérisation. Comme matériau dopant on peut utiliser le butyl PBD, à environ 1% en poids et le diméthyl POPOP, à environ 0,01% en poids.

L'étape suivante du procédé consiste à réaliser une préforme en recouvrant le barreau de polystyrène, dopé ou non, par de l'acétate de polyvinyle. Comme acétates de polyvinyle on peut utiliser ceux fabriqués par la société Rhône Poulenc commercialisés sous le nom de Rhodopas. Le recouvrement peut être réalisé en trempant le barreau de polystyrène dans une solution contenant de l'acétate de polyvinyle et de l'éthanol, ce dernier jouant le rôle de solvant, puis en remontant le barreau à vitesse lente. L'épaisseur de la couche d'acétate de polyvinyle obtenue dépend de la vitesse de remontée du barreau et de la viscosité de la solution. Au cours de la remontée la préforme obtenue est passée dans un four à environ 40°C afin de sécher la préforme et d'éliminer le solvant. L'opération peut être réalisée plusieurs fois de suite afin d'obtenir une couche finale relativement épaisse (0,5 mm).

Le recouvrement du barreau de polystyrène, dopé ou non, par cette couche d'acétate de polyvinyle permet d'obtenir une interface polystyrèneacétate de polyvinyle, donc une interface coeur-gaine de la fibre protégée pendant tout le reste des opérations. Ceci permet d'obtenir des fibres optiques présentant un bonne qualité d'interface.

L'étape suivante du procédé consiste à étirer lentement par gravité la préforme ainsi obtenue en la chauffant dans un four. Par exemple, la préforme obtenue descend à une vitesse de 2 cm/min. dans un four à deux étages, comprenant une colonne de préchauffe, constituant le premier étage, et une zone de chauffage par rayonnement infrarouge et par balayage d'azote chaud, constituant le deuxième étage. La préchauffe permet d'attenindre une température voisine de la température d'étirage. Les infrarouges permettent un chauffage homogène jusqu'au centre de la préforme. L'azote chaud permet de contrôler la température de surface. Avec ce type de four, des préformes de grand diamètre, c'est-à-dire de l'ordre de 56 mm de diamètre, peuvent être étirées.

Afin de faciliter l'étape d'étirage, on peut adapter la viscosité de l'acétate de polyvinyle à celle du polystrène, c'est-à-dire la rendre voisine de celle du polystyrène. L'adaptation peut être réalisée en mélangeant en solution au moins deux polymères d'acétate de vinyle présentant des viscosités différentes, et donc des températures de fusion, nécessaires au tirage, différentes. On peut par exemple préparer une solution contenant 30% en poids de Rhodopas M (point de fusion 100±5°C), 30% en poids de Rhodopas HH (point de fusion 180±10) et 40% en poids d'éthanol.

La fibre optique ainsi obtenue peut être par la suite recouverte d'une gaine mécanique de protection.

Avec un tel procédé de fabrication, il a été obtenu des fibres optiques cylindriques et régulières en acétate de polyvinyle et polystyrène de 0,5 à 2 mm de diamètre, ces valeurs n'étant pas limitatives. Ces fibres présentent des valeurs de transmission de la lumière comparables ou supérieures à celles des fibres optiques en matière plastique de l'art antérieur.

Sur une fibre optique de 2 mm de diamètre, éclairée à l'entrée par la lumière rouge diffuse d'un laser à hélium-néon accordé à 633 nm, il a été obtenu de façon reproductible une transmission de 60% pour 10 mètres, soit 95% par mètre de fibre. En scintillation, pour une fibre de 2 mm de diamètre, contenant 1% en poids de butyl PBD et 0,01% en poids de diméthyl POPOP, il a été obtenu une transmission de 80% par mètre pour la lumière émise par le diméthyl POPOP (430 nm).

Les fibres optiques obtenues présentent, de plus, un angle d'ouverture théorique en sortie de fibre de la lumière transmissible supérieur à ceux des fibres optiques de l'art antérieur: ±25 à 29° pour les fibres optiques du brevet japonais cité précédemment et ±37 à 46° pour les fibres optiques de l'invention, ce qui correspond à un angle solide double ($2\pi(1-\cos\theta)$).

En ce qui concerne l'adhérence du matériau de gaine sur le matériau de coeur, des observations au microscope, sur une coupe de fibre dans le cas où un solvant commun au polystyrène et au rhodopas est introduit dans le bain de revêtement, n'ont fait apparaître aucune limite nette entre le matériau de coeur et le matériau de gaine. Il se crée donc une interpénétration des deux matériaux et donc un gradient d'indice à l'interface. Cette interpénétration des matériaux peut être contrôlée au moment de la réalisation de la préforme en utilisant des concentrations plus élevées du solvant commun d'une part (par exemple l'acétate d'éthyle), en prolongeant la durée du trempé d'autre part.

Un tel procédé permet donc la réalisation de fibres notamment à gradient d'indice; dans les applications en télécommunications, l'intérêt essentiel de telles fibres est d'éviter la dispersion temporelle des signaux; en physique des particules, des fibres scintillantes à gradient d'indice pourraient faire progresser la précision des mesures en temps de vol.

**Revendications**

1. Fibres optiques en matière plastique comprenant un coeur et une gaine, caractérisées en ce que la gaine est constituée principalement d'un polymère d'acétate de vinyle ou d'un dérivé fluoré de l'acétate de vinyle.

2. Fibres optiques selon la revendication 1, caractérisées en ce que le coeur est constitué principalement d'un polymère d'un composé de formule:

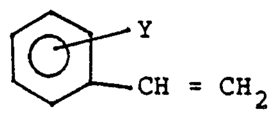

dans laquelle Y représente un hydrogène ou un radical alkyle.

3. Fibres optiques selon la revendication 2, caractérisées en ce que ledit composé est le styrène.

4. Fibres optiques selon l'une quelconque des revendications 1 à 3, caractérisées en ce que ces fibres sont des fibres à gradient d'indice.

5. Fibres optiques selon l'une quelconque des revendications 1 à 4, ayant des propriétés de scintillation ou de fluorescence, caractérisées en ce que le coeur contient des produits dopants scintillants ou fluorescents.

6. Fibres optiques selon la revendication 5, caractérisées en ce que les produits dopants sont le 2-(4,tert-butylphényl)5-(4-diphénylyl)1,3,4 oxadiazole (butyl PBD) et le 1,4-di 2-(4méthyl-5-phényloxazolyl) benzène (diméthyl de POPOP).

7. Procédé de fabrication de fibres optiques selon l'une quelconque des revendications 1 à 6, caractérisé en ce que l'on effectue un étirage par gravité d'une préforme constituée d'un barreau en matériau de coeur et d'une couche de matériau de gaine, constituée, principalement d'un polymère d'acetate de vinyle ou d'un dérivé fluoré de l'acétate de vinyle.

8. Procédé de fabrication selon la revendication 7, caractérisé en ce que la préforme coeur-gaine est étirée lors du passage dans un four, en dehors de tout contact mécanique.

9. Procédé de fabrication selon l'une quelconque des revendications 7 et 8, caractérisé en ce que le matériau de gaine est constitué d'un ou de deux polymères de viscosités différentes, afin d'adapter la viscosité dudit matériau de gaine à celle du matériau de coeur.

10. Procédé de fabrication selon l'une quelconque des revendications 7 à 9, caractérisé en ce que l'on réalise le barreau de coeur par une polymérisation suivie d'un traitement thermique.

11. Procédé de fabrication selon la revendication 10, de fibres optiques ayant des propriétés de scintillation ou de fluorescence, caractérisé en ce que, avant la polymérisation, on incorpore au matériau de coeur des produits dopants scintillants ou fluorescents.

**Patentansprüche**

1. Optische Kunststoffasern, enthaltend einen Kern und einen Mantel, dadurch gekennzeichnet, daß der Mantel hauptsächlich aus einem Vinylacetatpolymer oder aus einem Fluorderivat von Vinylacetat besteht.

2. Optische Fasern nach Anspruch 1, dadurch gekennzeichnet, daß der Kern hauptsächlich aus einem Polymer einer Verbindung der Formel:

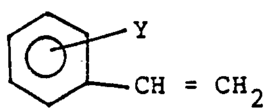

besteht, wobei Y Wasserstoff oder ein Alkylradikal repräsentiert.

3. Optische Fasern nach Anspruch 2, dadurch gekennzeichnet, daß die genannte Verbindung Styrol ist.

4. Optische Fasern nach einem der Ansprüche 1 bis 3, dadurch gekennzeichnet, daß diese Fasern Gradientindexfasern sind.

5. Optische Fasern nach einem der ansprüche 1 bis 4, die Szintillations- oder Fluoreszenzeigenschaften aufweisen, dadurch gekennzeichnet, daß der Kern Szintillations- oder Fluoreszenz-Dotierungsprodukte enthält.

6. Optische Fasern nach Anspruch 5, dadurch gekennzeichnet, daß die Dotierungsprodukte 2-(4,tert.-Butylphenyl)-5-(4-biphenylyl)1,3,4-oxadiazol (Butyl PBD) und 1,4-Di-2-(4-methyl-5-phenyloxazolyl)benzol (Dimethyl von POPOP) ist.

7. Verfahren zur Herstellung von optischen Fasern nach einem der Ansprüche 1 bis 6, dadurch gekennzeichnet, daß man eine Streckung unter Schwerkraftwirkung eines Vorformlings aus einem Stab aus Kernmaterial und einer Schicht aus Mantelmaterial, bestehend hauptsächlich aus einem Vinylacetatpolymer oder einem Fluorderivat von Vinylacetat ausführt.

8. Herstellungsverfahren nach Anspruch 7, dadurch gekennzeichnet, daß der Kern/Mantel-Vorformling beim Durchlauf durch einen Ofen frei jeder mechanischen Berührung gestreckt wird.

9. Herstellungsverfahren nach einem der Ansprüche 7 und 8, dadurch gekennzeichnet, daß das Mantelmaterial von einem oder zwei Polymeren unterschiedlicher Viskositäten gebildet ist, um die Viskosität des Mantelmaterials an die des Kernmaterials anzupassen.

10. Herstellungsverfahren nach einem der Ansprüche 7 bis 9, dadurch gekennzeichnet, daß man den Kernstab mittels einer Polymerisation, gefolgt von einer thermischen Behandlung herstellt.

11. Herstellungsverfahren nach Anspruch 10 für optische Fasern, die Szintillations- oder Fluoreszenzeigenschaften aufweisen, dadurch gekennzeichnet, daß man vor der Polymerisation in das Kernmaterial Szintillations- oder Fluoreszenz-Dotierungsprodukte inkorporiert.

**Claims**

1. Optical fibres made of plastic comprising a core and a sheath, which are characterized in that the sheath consists chiefly of a polymer of vinyl acetate or of a fluorinated derivative of vinyl acetate.

2. Optical fibres according to Claim 1, characterized in that the core consists chiefly of a polymer of a compound of formula:

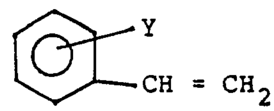

in which Y denotes a hydrogen or an alkyl radical.

3. Optical fibres according to Claim 2, characterized in that the said compound is styrene.

4. Optical fibres according to any one of Claims 1 to 3, characterized in that these fibres are fibres with an index gradient.

5. Optical fibres according to any one of Claims 1 to 4, having scintillation or fluorescence properties, characterized in that the core contains scintillating or fluorescent dopant materials.

6. Optical fibres according to Claim 5, characterized in that the dopant materials are 2-(4-tert-butylphenyl)-5-(4-biphenylyl)-1,3,4-oxadiazole (butyl PBD) and 1,4-di-2-(4-methyl-5-phenyloxazolyl)benzene (dimethyl POPOP).

7. Process for the manufacture of optical fibres according to any one of Claims 1 to 6, characterized in that there is performed a drawing under gravity of a preform consisting of a rod of core material and a layer of sheath material which consist chiefly of a polymer of vinyl acetate or of a fluorinated derivative of vinyl acetate.

8. Manufacturing process according to Claim 7, characterized in that the core-sheath preform is drawn while passing through an oven, away from any mechanical contact.

9. Manufacturing process according to either of Claims 7 and 8, characterized in that the sheath material consists of one or two polymers of different viscosities, in order to adapt the viscosity of the said sheath material to that of the core material.

10. Manufacturing process according to any one of Claims 7 to 9, characterized in that the core rod is produced by a polymerization followed by a heat treatment.

11. Process for the manufacture, according to Claim 10, of optical fibres having scintillation or fluorescence properties, characterized in that scintillating or fluorescent dopant materials are incorporated into the core material before the polymerization.